# EUROPEAN PATENT APPLICATION

(11) **EP 3 988 342 A1**
(43) Date of publication of application: **27.04.2022**
(21) Application number: 20825680.0
(22) Date of filing: 11.06.2020
(51) Int. Cl.: B60C 15/04, B60C 15/06

(54) **TIRE**

(30) Priority: 18.06.2019 JP 2019112958
(71) Applicant: BRIDGESTONE CORPORATION, Chuo-ku Tokyo 104-8340 (JP)
(72) Inventor: FUKUSHIMA Atsushi, Tokyo, 104-8340 (JP)
(74) Representative: Oxley, Robin John George
(86) International application number: PCT/JP2020/023015
(87) International publication number: WO 2020/255850

(57) **Abstract**

A bead portion of a pneumatic tire (10) includes an annular bead structure (61) in which a core part (62) in which a bead core (64) is covered with a resin, and a bead filler (63) which is formed of a resin, are integrally formed. A plurality of concave portions (70) and a plurality of convex portions (71) are formed on a surface of the bead structure (61). Each of the concave portions (71) is extended to and communicated with a tire radial direction outside end (61a) of the bead structure (61).

## Description

### [Technical Field]

The present invention relates to a tire in which a part of a bead portion is formed of a resin material.

### [Background Art]

Conventionally, there has been known a tire including a bead structure in which a core part and a bead filler are integrally formed. In the core part, a bead core is covered with a resin. The bead filler is formed of a resin (See Patent literature 1).

In a manufacturing process of the tire, a carcass ply is arranged around the bead structure. In this case, a covering rubber which covers carcass cords, adheres to a resin surface of the bead structure.

### [Citation List]

### [Patent Literature]

[PTL 1] Japanese Unexamined Patent Application Publication No. 2019-1417

### [Summary of Invention]

However, since the high-rigid bead structure formed of a resin is large in size (volume), the bead structure is difficult to follow the movement of a rubber member such as the carcass ply disposed in the vicinity thereof.

Thus, there is a possibility that air enters between the bead structure and the carcass ply, that is, air intrusion occurs.

The air intrusion easily causes manufacturing defects and deteriorates a yield rate.

Therefore, the present invention has been made in view of such a circumstance, and an object of the present invention is to provide a tire capable of suppressing a deterioration of a yield rate while using a bead structure in which a core part and a bead filler are integrally formed with a resin.

One aspect of the present invention is a tire including: a tread portion in contact with a road surface; a tire side portion continuous to the tread portion and positioned inside in a tire radial direction of the tread portion; a bead portion continuous to the tire side portion and positioned inside in a tire radial direction of the tire side portion; and a carcass ply forming a skeleton of the tire, wherein the bead portion includes an annular bead structure in which a core part and a bead filler are integrally formed, a bead core being covered with a resin in the core part, and the bead filler being formed of a resin, the carcass ply includes: a body portion; and a folded portion continuous to the body portion and folded back to an outside in a tire width direction via a tire radial direction inside end of the bead structure, a plurality of concave portions and a plurality of convex portions are formed on a surface of the bead structure, and each of the concave portions is extended to and communicated with a tire radial direction outside end of the bead structure.

### [Brief Description of Drawings]

FIG. 1 is a cross-sectional view of a pneumatic tire 10.
FIG. 2 is a partially enlarged cross-sectional view of the pneumatic tire 10.
FIG. 3 is a partially perspective view of a bead structure 61.
FIG. 4 is an explanatory diagram of a manufacturing process of the pneumatic tire 10.
FIG. 5 is a partially perspective view of the bead structure 61 according to a first modified example.
FIG. 6 is a partially perspective view of the bead structure 61 according to a second modified example.
FIG. 7 is a partially perspective view of the bead structure 61 according to a third modified example.

### [Description of Embodiments]

Embodiments will be described below with reference to the drawings. The same functions and configurations are denoted by the same or similar reference numerals, and descriptions thereof are omitted as appropriate.

### (1)Overall Schematic Configuration of Tire

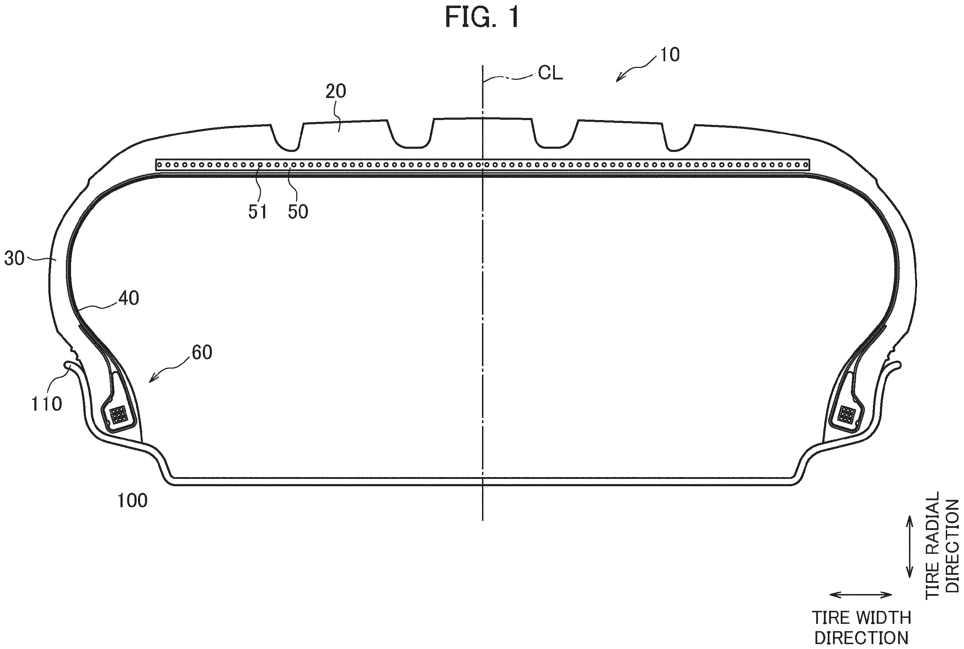

FIG. 1 is a cross-sectional view of a pneumatic tire 10 according to the present embodiment. Specifically, FIG. 1 is a cross-sectional view of the pneumatic tire 10 along a tire radial direction and a tire width direction. In FIG. 1, a cross-sectional hatching is not shown (hereinafter the same).

As shown in FIG. 1, the pneumatic tire 10 includes a tread portion 20, a tire side portion 30, a carcass ply 40, a belt layer 50, and a bead portion 60.

The tread portion 20 is a portion contacting with a road surface (unillustrated). On the tread portion 20, a pattern (unillustrated) corresponding to the use environment of the pneumatic tire 10 and the kind of a vehicle to which the pneumatic tire 10 is to be mounted, is formed.

The tire side portion 30 continues to the tread portion 20 and is positioned inside in the tire radial direction of the tread portion 20. The tire side portion 30 is a region from a tire width direction outside end of the tread portion 20 to an upper end of the bead portion 60. The tire side portion 30 is sometimes referred to as a side wall or the like.

The carcass ply 40 forms a skeleton of the pneumatic tire 10. The carcass ply 40 has a radial structure in which carcass cords (unillustrated) arranged radially along the tire radial direction are covered with a rubber material. However, the present invention is not limited to the radial structure, and the carcass ply 40 may have a bias structure in which the carcass cords are arranged so as to cross each other in the tire radial direction.

The carcass cords are not particularly limited, and can be formed of an organic fiber cord in the same manner as a tire for standard passenger cars (including a minivan and a SUV (Support Utility Vehicle)).

The belt layer 50 is provided inside in the tire radial direction of the tread portion 20. The belt layer 50 is a single-layer spiral belt having a reinforcing cord 51 and the reinforcing cord 51 is covered with a resin. However, the belt layer 50 is not limited to the single-layer spiral belt. For example, the belt layer 50 may be a two-layer interlaced belt covered with a rubber.

The bead portion 60 continues to the tire side portion 30 and is positioned inside the tire radial direction of the tire side portion 30. The bead portion 60 has an annular shape extending in a tire circumferential direction. The carcass ply 40 is folded back from an inside in the tire width direction to an outside in the tire width direction, via the bead portion 60.

The pneumatic tire 10 is assembled to a rim wheel 100. Specifically, the bead portion 60 is locked to a rim flange 110 formed on a radial direction outside end of the rim wheel 100.

The pneumatic tire 10 is a tire in which air is filled in the internal space formed by assembling the tire to the rim wheel 100. However, a gas to be filled in the internal space is not limited to air. The gas may be an inert gas such as nitrogen.

An inner liner (unillustrated) for preventing air (or an inert gas such as nitrogen) filled in the internal space of the pneumatic tire 10 assembled to the rim wheel 100 from leaking is stuck to a tire inner side surface of the pneumatic tire 10.

### (2) Configuration of Bead Portion 60

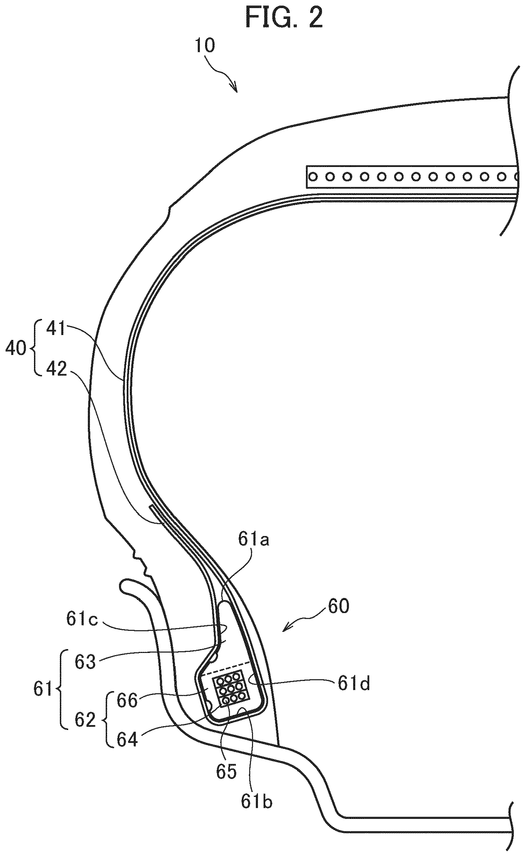

Next, a concrete configuration of the bead portion 60 will be described. FIG. 2 is a partially enlarged cross-sectional view of the pneumatic tire 10. Specifically, FIG. 2 is a partially enlarged cross-sectional view of the pneumatic tire 10 including the bead portion 60 along the tire width direction and the tire radial direction.

As shown in FIG. 2, the bead portion 60 according to this embodiment includes an annular bead structure 61 in which a core part 62 and a bead filler 63 are integrally formed. Specifically, the bead structure 61 includes the core part 62 and the bead filler 63.

The core part 62 includes a bead core 64 and a covering resin 66.

The bead core 64 is formed by coating multiple (e.g., three) bead cords 65 with a resin and stacking them in multiple layers (e.g., three layers) along the tire radial direction without gaps. In this embodiment, the bead core 64 is formed in a square shape in a cross section along the tire radial direction and the tire width direction.

Each of the bead cords 65 is an annular (ring) member extending in the tire circumferential direction and made of a metal (steel). Each of the bead cords 65 is not specifically twisted and is formed by winding a single bead cord 65 multiple times along the tire circumferential direction.

The bead core 64 is covered with the covering resin 66.

The bead filler 63 is disposed adjacent to an outside of the core part 62 in the tire radial direction. As shown in FIG. 2, a tire radial direction outside area of the bead filler 63 has a triangular shape with a gradual decrease in thickness toward the outside in the tire radial direction.

The covering resin 66 of the core part 62 and the bead filler 63 are formed of the same resin material.

For example, as the resin material, a thermoplastic resin, a thermoplastic elastomer (TPE), a thermosetting resin or the like can be used.

The thermoplastic resin includes polyurethane resin, polyolefin resin, vinyl chloride resin, polyamide resin, polyester resin, and the like. Further, as the thermoplastic resin material, for example, one having a deflection temperature under load (at 0.45 MPa load) specified in ISO 75-2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more, can be used.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), and the like.

As shown in FIG. 2, the bead structure 61 includes a tire radial direction outside end 61a and a tire radial direction inside end 61b.

The carcass ply 40 is folded back to the outside in the tire width direction via the tire radial direction inside end 61b of the bead structure 61. Specifically, the carcass ply 40 includes a body portion 41 and a folded portion 42.

The body portion 41 is provided over the tread portion 20, the tire side portion 30 (see FIG. 1) and the bead portion 60, and is a portion until it is folded in the bead portion 60.

The folded portion 42 is a portion continued to the body portion 41 and folded back to the outside in the tire width direction via the tire radial direction inside end 61b of the bead structure 61.

As shown in FIG. 2, the bead structure 61 includes a tire width direction outside surface 61c and a tire width direction inside surface 61d.

The surface of the bead structure 61 is formed in an uneven shape. Specifically, a plurality of slits are formed on the tire width direction outside surface 61c.

### (3) Examples of Shape of Bead Structure 61

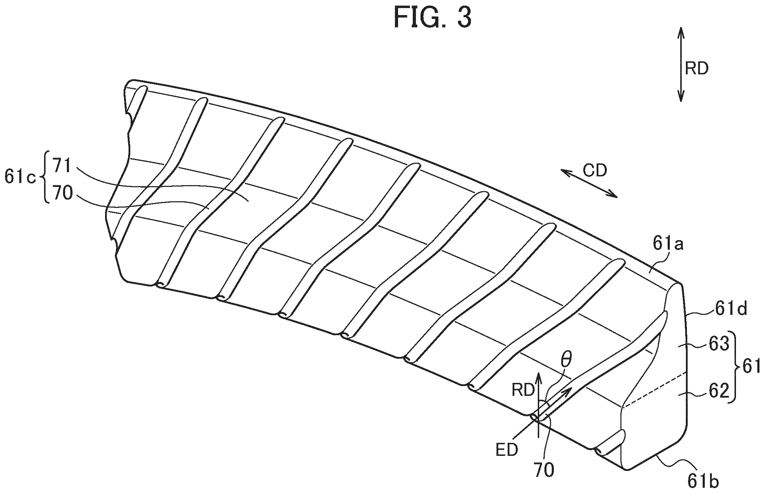

Next, a surface shape of the bead structure 61 will be described. FIG. 3 is a partially perspective view of the bead structure 61. Note that the bead core 64 is omitted in FIG. 3.

A plurality of concave portions 70 and a plurality of convex portions 71 are formed on the tire width direction outside surface 61c of the bead structure 61. Specifically, the concave portions 70 and the convex portions 71 are formed alternately on the tire width direction outside surface 61c of the bead structure 61 along a circumferential direction CD of the bead structure 61.

Each of the concave portions 70 is formed in a slit shape. Each of the concave portions 70 extends in a straight line in a direction ED that is inclined by an angle (inclination angle) θ (0<θ<90°) with respect to a radial direction RD of the bead structure 61. The slits including the concave portions 70 are formed at predetermined intervals along the circumferential direction CD.

Each of the concave portions 70 is extended to and communicated with the tire radial direction outside end 61a of the bead structure 61. Each of the concave portions 70 may be extended to and communicated with the tire radial direction outside end 61a of the bead structure 61 while being branched into a plurality of portions in the middle thereof.

### (4) Adhesion of Carcass Ply 40 to Bead Structure 61

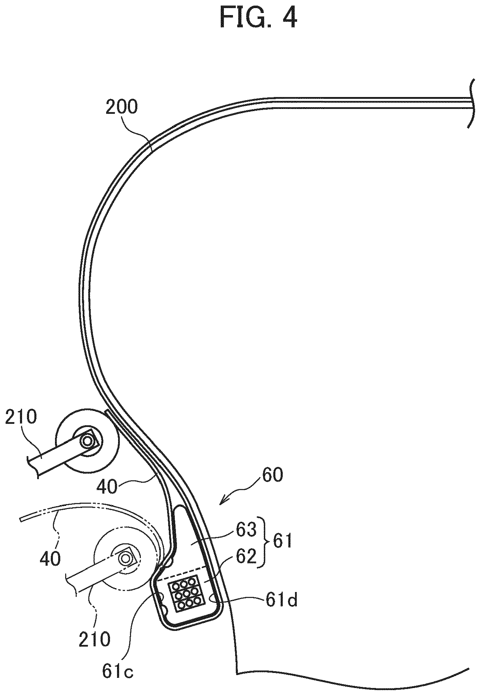

Next, an adhesion of the carcass ply 40 to the bead structure 61 will be described. FIG. 4 is an explanatory diagram of a manufacturing process of the pneumatic tire 10. Specifically, FIG. 4 is an explanatory diagram of a folding process of the carcass ply 40 at a time of molding a green tire which is a foundation for the pneumatic tire 10.

The green tire which is the foundation for the pneumatic tire 10, is molded using a tire molding apparatus (not shown). First, the annular bead structure 61 is attached to both ends of the carcass ply 40 which is cylindrically molded. In this state, the carcass ply 40 adheres to the tire width direction inside surface 61d of the bead structure 61. Next, the carcass ply 40 is placed around a periphery of a molding bladder 200, which is made of an elastic material such as a rubber.

In this state, the carcass ply 40 is folded over the bead structure 61 using a pressing roller 210 while the tire molding apparatus supplies compressed air to an inside of the molding bladder 200 to inflate and expand a middle part of the carcass ply 40 in an axial direction of the molding bladder 200 outward in a radial direction of the molding bladder 200.

The pressing roller 210 bonds the carcass ply 40 to the bead structure 61 while pressing the carcass ply 40 along the tire width direction outside surface 61c of the bead structure 61 during the folding of the carcass ply 40.

### (5) Action and effects

According to the embodiment described above, the following effects can be obtained. Specifically, a plurality of concave portions 70 and a plurality of convex portions 71 are formed on the tire width direction outside surface 61c of the bead structure 61. Each of the concave portions 70 is extended to and communicated with the tire radial direction outside end 61a of the bead structure 61.

With this configuration, when the pressing roller 210 presses the carcass ply 40 and bonds the carcass ply 40 to the bead structure 61 in the folding process of the carcass ply 40, air that exists between the bead structure 61 and the carcass ply 40 can escape out through each of the concave portions 70 formed on the tire width direction outside surface 61c of the bead structure 61.

This prevents air from remaining between the bead structure 61 and the carcass ply 40 in the folding process of the carcass ply 40. Therefore, it is possible to suppress a deterioration of a yield rate due to the air intrusion while using the bead structure 61.

According to the embodiment described above, each of the concave portions 70 is formed in a slit shape, and is inclined with respect to the radial direction RD of the bead structure 61.

With this configuration, even when an interval between the slits including the concave portions 70 is large, it is possible to set the slits including the concave portions 70 such that there is always one or more slits on a pressed surface when the pressing roller 210 bonds the carcass ply 40 to the bead structure 61 while pressing the carcass ply 40, by adjusting the inclination angle θ.

This efficiently prevents air from remaining between the bead structure 61 and the carcass ply 40 in the folding process of the carcass ply 40.

According to the embodiment described above, the concave portions 70 are formed at predetermined intervals

With this configuration, it is surely possible to set the slits including the concave portions 70 such that there is always one or more slits on a pressed surface when the pressing roller 210 bonds the carcass ply 40 to the bead structure 61 while pressing the carcass ply 40.

This more surely prevents air from remaining between the bead structure 61 and the carcass ply 40 in the folding process of the carcass ply 40.

According to the embodiment described above, the concave portions 70 and the convex portions 71 are formed on the tire width direction outside surface 61c of the bead structure 61.

With this configuration, the concave portions 70 and the convex portions 71 are formed only on one side surface of the bead filler 63. Even when an area located at the tire width direction outside of the bead filler 63 is thin, this improves the occurrence of the air intrusion on the tire width direction outside surface 61c of the bead structure 61 while keeping rigidity at the area.

### (6) Other Embodiments

Although the contents of the present invention have been described above with reference to the examples, it will be obvious to those skilled in the art that the present invention is not limited to these descriptions and that various modifications and improvements are possible.

### (6-1) First Modified Example

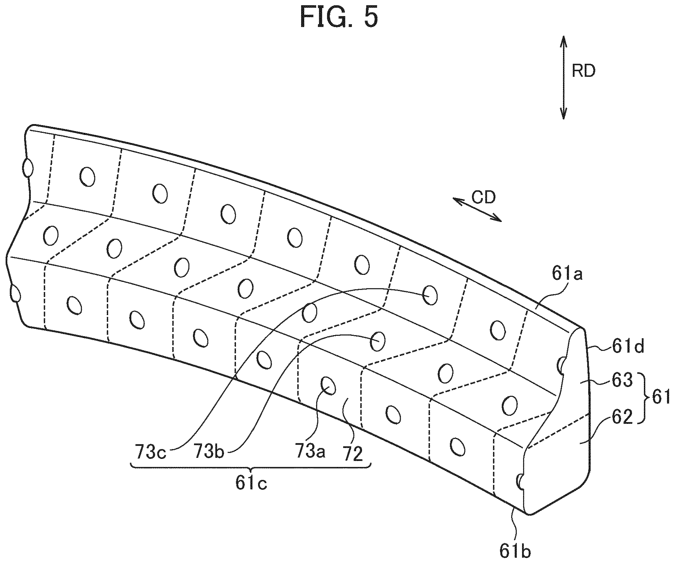

Next, a first modified example of a surface shape of the bead structure 61 will be described. FIG. 5 is a partially perspective view of the bead structure 61 according to the first modified example. Note that the bead core 64 is omitted in FIG. 5.

As shown in FIG. 5, a plurality of concave portions 72, a plurality of convex portions 73a, a plurality of convex portions 73b and a plurality of convex portions 73c are formed on the tire width direction outside surface 61c of the bead structure 61.

Specifically, the concave portions 72, the convex portions 73a, the convex portions 73b and the convex portions 73c are formed on the tire width direction outside surface 61c of the bead structure 61 along the circumferential direction CD of the bead structure 61.

Each of the convex portions 73a, the convex portions 73b and the convex portions 73c is formed into a hemispherical shape and is independently provided from the other convex portions. Thus, each of the convex portions 73a, the convex portions 73b and the convex portions 73c is disposed to be spaced away from the other convex portions.

With this configuration, when the pressing roller 210 presses the carcass ply 40 and bonds the carcass ply 40 to the bead structure 61 in the folding process of the carcass ply 40, a path for air, which exists between the bead structure 61 and the carcass ply 40, to escape outside, can be expanded in multiple directions instead of one direction.

This efficiently prevents air from remaining between the bead structure 61 and the carcass ply 40 in the folding process of the carcass ply 40.

### (6-2) Second Modified Example

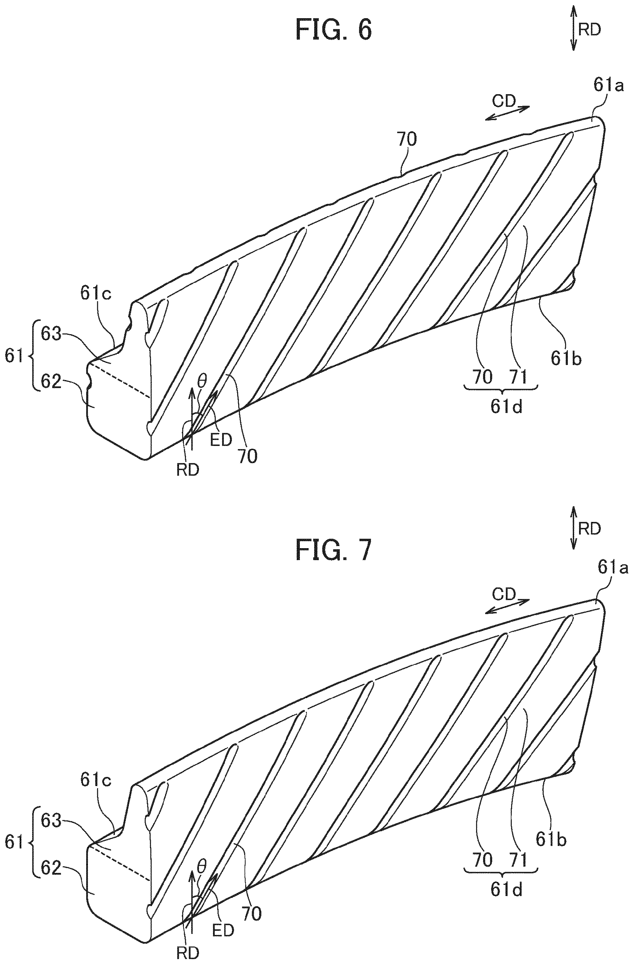

Next, a second modified example of a surface shape of the bead structure 61 will be described. FIG. 6 is a partially perspective view of the bead structure 61 according to the second modified example. Note that the bead core 64 is omitted in FIG. 6.

The plurality of concave portions 70 and the plurality of convex portions 71 are formed on the tire width direction outside surface 61c and the tire width direction inside surface 61d of the bead structure 61. Specifically, the plurality of concave portions 70 and the plurality of convex portions 71 are also formed alternately on the tire width direction inside surface 61d of the bead structure 61 along the circumferential direction CD of the bead structure 61.

Each of the concave portions 70 is formed in a slit shape. Each of the concave portions 70 extends in a straight line in a direction ED that is inclined by an angle (inclination angle) θ (0<θ<90°) with respect to the radial direction RD of the bead structure 61. The slits including the concave portions 70 are formed at predetermined intervals along the circumferential direction CD.

Each of the concave portions 70 is extended to and communicated with the tire radial direction outside end 61a of the bead structure 61. Each of the concave portions 70 may be extended to and communicated with the tire radial direction outside end 61a of the bead structure 61 while being branched into a plurality of portions in the middle thereof.

With this configuration, when the annular bead structure 61 is attached to both ends of the carcass ply 40 which is cylindrically molded in the folding press of the carcass ply 40, air that exists between the bead structure 61 and the carcass ply 40 can escape out through each of the concave portions 70 formed on the tire width direction inside surface 61d of the bead structure 61.

This surely prevents air from remaining between the bead structure 61 and the carcass ply 40 in the folding process of the carcass ply 40.

### (6-3) Third Modified Example

Next, a third modified example of a surface shape of the bead structure 61 will be described. FIG. 7 is a partially perspective view of the bead structure 61 according to the second modified example. Note that the bead core 64 is omitted in FIG. 7.

As shown in FIG. 7, the plurality of concave portions 70 and the plurality of convex portions 71 are formed only on the tire width direction inside surface 61d of the bead structure 61.

With this configuration, the concave portions 70 and the convex portions 71 are formed only on one side surface of the bead filler 63. Even when an area located at the tire width direction outside of the bead filler 63 is thin, this improves the occurrence of the air intrusion on the tire width direction inside surface 61d of the bead structure 61 while keeping rigidity at the area.

### (6-4) Other Modified Example

As other modified example, concave portions and convex portions may be also formed on the tire radial direction inside end 61b of the bead structure 61.

A concave portion formed in a slit shape may be extended in a spiral or looped shape on the entire surface of the bead structure 61.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

- 10: Pneumatic tire
- 20: Tread portion
- 30: Tire side portion
- 40: Carcass ply
- 41: Body portion
- 42: Folded portion
- 50: Belt layer
- 51: Reinforcement cord
- 60: Bead portion
- 61: Bead structure
- 61a: Tire radial direction outside end
- 61b: Tire radial direction inside end
- 61c: Tire width direction outside surface
- 61d: Tire width direction inside surface
- 62: Core part
- 63: Bead filler
- 64: Bead core
- 65: Bead cord
- 66: Covering resin
- 70, 72: Concave portion
- 71, 73a, 73b, 73c: Convex portion
- 100: Rim wheel
- 110: Rim flange
- 200: Molding bladder
- 210: Pressing roller
- RD: Radial direction
- CD: Circumferential direction

## Claims

1. A tire comprising:
a tread portion in contact with a road surface;
a tire side portion continuous to the tread portion and positioned inside in a tire radial direction of the tread portion;
a bead portion continuous to the tire side portion and positioned inside in a tire radial direction of the tire side portion; and
a carcass ply forming a skeleton of the tire,
wherein
the bead portion includes an annular bead structure in which a core part and a bead filler are integrally formed,
a bead core being covered with a resin in the core part, and
the bead filler being formed of a resin, the carcass ply includes:
a body portion; and
a folded portion continuous to the body portion and folded back to an outside in a tire width direction via a tire radial direction inside end of the bead structure,
a plurality of concave portions and a plurality of convex portions are formed on a surface of the bead structure, and
each of the concave portions is extended to and communicated with a tire radial direction outside end of the bead structure.

2. The tire according to claim 1, wherein
each of the concave portions is formed in a slit shape, and
each of the concave portions is inclined with respect to a radial direction of the bead structure.

3. The tire according to claim 2, wherein the concave portions are formed at predetermined intervals.

4. The tire according to claim 1, wherein each of the convex portions is independently provided from the other convex portions.

5. The tire according to claim 1, wherein the plurality of concave portions and the plurality of convex portions are formed at least on a tire width direction outside surface of the bead structure.
